Europäisches Patentamt

(19) European Patent Office

Office européen des brevets

(11) Publication number: **0 192 483**
**B1**

# EUROPEAN PATENT SPECIFICATION

(45) Date of publication of the patent specification:
25.04.90

(51) Int. Cl.⁴: **F16B 45/00**, A01K 1/064,
E05C 19/10, A44B 13/00

(21) Application number: 86301216.7

(22) Date of filing: 20.02.86

(54) Closure arrangement.

(30) Priority: 20.02.85 NZ 211170

(43) Date of publication of application:
27.08.86 Bulletin 86/35

(45) Publication of the grant of the patent:
25.04.90 Bulletin 90/17

(84) Designated Contracting States:
AT BE CH DE FR GB IT LI LU NL SE

(56) References cited:
DE-B- 2 448 809
US-A- 2 796 279

(73) Proprietor: FRANKLIN MACHINERY LIMITED, 37 Subway
Road, Pukekohe Auckland(NZ)

(72) Inventor: Picot, Lionel Heber, Goldings Road, Pukekohe
Auckland(NZ)
Inventor: Anderson, Rod Bruce, Quinn Road, Pukekohe
Auckland(NZ)

(74) Representative: Leale, Robin George et al, FRANK B.
DEHN & CO. Imperial House 15-19 Kingsway, London
WC2B 6UZ(GB)

ACTORUM AG

## Description

The present invention relates to a closure arrangement and in particular to a closure arrangement for use with gates, doors and the like. In particular gates, doors and the like used on farms, orchards and the like.

Up until this time closure arrangements or members of a generally "hook" type formation have been known.

The closure arrangements used up until this time have been used in association with a staple or substantially "U" shaped connector, to allow for releaseable engagement therebetween, such as to permit the releaseable closing of doors, gates and the like.

In arrangements used up until this time, such as for example on farms, orchards and the like, a staple or substantially "U" shaped connector is hammered or inserted into a gate post or upright. A known closure .arrangement is then attached to a door or gate, such as by an elongate length of strip, wire or chain. The closure member is then able to be engaged over and with the connector, to close the gate, and to be disengaged therefrom to open the gate.

The closure arrangements used up until this time have essentially been of a substantially "hook" type formation being integrally formed with at least first and second arm portions.

The arm portions are spaced apart so as to define a closure space therebetween. At least one of the arm portions has a locking clip pivotally attached thereto. The locking clip is preferably substantially semi-circular or "U" shaped in formation and free ends thereof are pivotally connected to substantially opposing and aligned sides of at least one arm portion of the hook. This then allows the locking clip to pivot freely relative to the arm portion and to freely move into a position in which it is in abutment with an inner surface of an adjacent and spaced apart second arm portion. In use, the hook is placed over a connector, so that the connector moves into the closure space between the arm portions. In being so located, the locking clip is pivoted out of its position in which it abuts against an adjacent surface of the second arm portion, so as to allow entry of the connector into the closure space. Following such entry, the locking clip is released and pivoted back into a position in which it abuts against said spaced apart inner surface of the second arm portion, in which position it locates and serves to hold the closure arrangement in position, relative to the connector.

The connector and closure arrangement are then engaged one with the other in a releaseable locking engagement.

This arrangement has however run across problems, in that only a slight movement of the closure arrangement relative to the connector is necessary to loosen and move the locking clip out of its abutment with the second arm portion, to thus open the closure space and allow for disengagement of the closure arrangement from the connector.

In farms and orchards, some animals such as for example cattle, become relatively educated as to farm hardware and the like. Thus, in such situations, animals such as cattle can utilise their heads and noses to push or move the hook portion of closure members upwardly, knowing that the upward movement will in turn move the freely pivoted locking clip out of position and allow for disengagement of the closure arrangement from the connector. The problems associated with such closure arrangements used up until this time, also mean that such closure arrangements can be opened relatively easily by children, and this is of course a problem when such a closure arrangement is used for closing and securing doors or gates such as around prohibited areas, swimming pools, lakes, dangerous goods and the like.

It is known from DE-B 2 448 809 to provide a closure arrangement including a substantially hook shaped member comprising a shorter first arm portion and a longer, at least partially curved second arm portion, said first and second arm portions being spaced apart one from the other, so as to define a closure space therebetween; one of said arm portions having a locking member pivotally connected thereto, said locking member being formed and mounted to said one arm portion so as to be resiliently biased into releasable abutment with an adjacent surface of the other arm portion so as to extend into said closure space to substantially close said space; said locking member being capable of moving out of abutment with said other arm portion to provide an opening to said closure space. In this arrangement the locking member is pivotally connected to the longer arm portion and can be unlocked by a pushing movement away from its abutment with the shorter arm portion.

Essentially, it is a problem with the closure arrangements used up until this time, that such arrangements have been capable of being disengaged too easily, by both animals and people.

It is an object of this invention to go some way towards overcoming or at least minimising the problems associated with closure arrangements used up until this time.

It is a further object of this invention to provide a closure arrangement which is straight forward and efficient in use.

According to one aspect of this invention there is provided a closure arrangement .as discussed above in connection with DE-B 2 448 809, characterised in that said locking member is pivotally connected to the shorter first arm portion and the adjacent surface releasably abutted by the locking member is provided on the longer second arm portion at a location remote from the free end thereof, said free end being inclined towards and remote from the free end of the shorter first arm portion so as to prevent unintentional release of the closure arrangement.

According to a further aspect of this invention, there is provided a closure arrangement including a shorter first arm portion and a longer second arm portion, said first and second arm portions being integrally formed but spaced apart one from the other, so as to define a closure space therebetween, one of said arm portions having a locking member pivotally connected thereto, ends of said locking member being pivotally connected to said one arm portion and being offset relative to each other, so as to resiliently bias said locking member into releasable abutment with an adjacent and spaced apart surface of the other arm portion, said locking member thereby being capable of substantially closing said space; said locking member being capable of being moved away from abutment with said adjacent surface to provide an opening to said closure space, characterised in that said locking member is pivotally connected to the shorter first arm portion and the adjacent surface releasably abutted by the locking member is provided on the longer second arm portion at a location remote from the free end thereof, said free end being inclined towards and remote from the free end of the shorter first arm portion so as to prevent unintentional release of the closure arrangement.

A preferred embodiment of the invention will now be described by way of example and with reference to the accompanying drawings wherein:

Figure 1: is a side view of a closure arrangement according to one form of the present invention.

Figure 2: is a plan view of a closure arrangement along the lines A–A of Figure 1 of the accompanying drawings.

The closure arrangement of the present invention is preferably formed of an appropriate steel material, although this is by way of example only. If desired, the closure arrangement can be formed of any other appropriate material, such as for example plastics and the like.

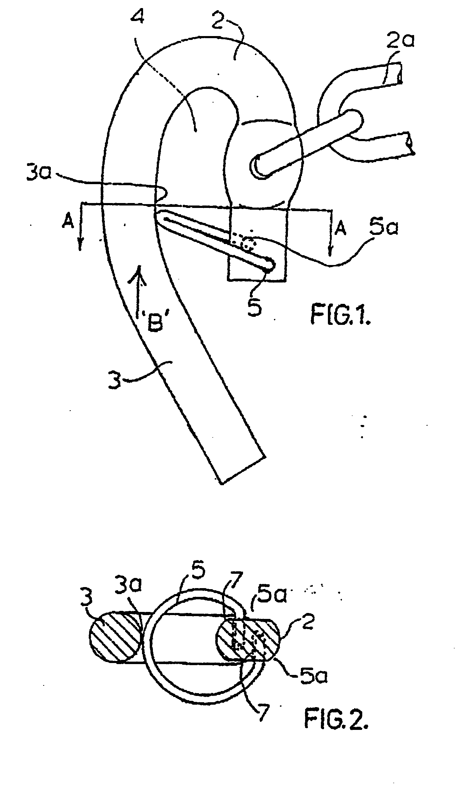

Referring to Figure 1 of the accompanying drawing, it will be seen that the closure arrangement is of an essentially "hook" shaped formation, including at least two spaced apart arm portions, being a first arm portion 2 and a second arm portion 3. The first arm portion 2 is essentially elongate in formation and is curved at its upper end and leads into a second, curved elongate arm portion 3. The arm portions 2 and 3 are integrally formed one with the other, and, the arm portion 3 is longer than the arm portion 2, and curves inwardly towards and under a lower end of the arm portion 2. The arm portions 2 and 3 define between them, a closure space 4.

As shown in Figure 1 of the drawings, the first arm portion 2 is connected to a chain 2a, which in turn can be attached to a gate or door, or the like.

In order to secure such a gate to a gate post or upright, a connector, such as a staple or substantially "U" shaped connector, is hammered or placed into, or engaged with, a gate post or upright (not shown). Thus, in order to secure a gate to a gate post or upright, such as in a closed position, the elongate arm portion 3 is slipped over the connector, so that the connector is passed up into and housed within the closure space 4. This serves to secure the gate in a closed position. In order to open the gate, an upward movement is applied to the arm portion 3, which will disengage the connector from within the closure space 4, and disengage the closure arrangement from the connector. This will then allow the gate or door to open.

While this embodiment is described with reference to the closure arrangement being attached to a gate or door, and the connector to a post or upright, it should be appreciated that this is by way of example only. If desired, the closure arrangement can be mounted to a post or upright, and the connector to a gate or door.

It will be appreciated that the prior arrangements referred to hereinbefore, which have brought about certain problems, have had a locking clip pivotally connected to a longer arm portion 2. This then means that such locking clips have up until this time, been able to pivot relative to longer arm portions 2. Thus in the engagement referred to hereinbefore, and on a connector being located within the closure space 4, a locking clip has been pivoted out of the way to allow for location, whereafter it will move back into substantial abutment with an inner adjacent surface of a shorter arm portion, to close off the closure space and allow for some form of locking. To remove the connector 1 from within the closure space, the locking clip is pivoted out of position to allow for removal. As indicated hereinbefore, numerous problems have been associated with such arrangements.

The arrangement of the preferred embodiment of the present invention allows for a locking member in the form of a clip or ring, shown as 5 in the accompanying drawings. The locking member 5 is preferably of a substantially "U" formation, and is pivotally attached at its free ends, within locating holes 7 provided adjacent a bottom end of the first arm portion 2.

The free ends 5a of the locking member 5 are preferably bent or turned inwardly, so as to allow for pivotal engagement with such holes 7, the holes 7 being preferably off set relative to each other, both longitudinally relative to the longitudinal axis of the first arm portion 2 and laterally relative to each other. While it is preferred that the free ends 5a be pivotally engaged with the first arm portion 2, so as to be both longitudinally and laterally off set, this is by way of example only. If desired, the ends 5a of the locking member 5 and the holes or bores 7 can be longitudinally off set relative to each other, and/or laterally or horizontally off set relative to each other.

In the preferred form of the invention, the locking member 5 is formed of a sprung or biased material, such as for example a sprung metal material. This is however by way of example only.

The location of the locking member 5, relative to the first arm portion 2, is shown with reference to Figures 1 and 2 of the accompanying drawings.

The pivotal location of the locking member 5 relative to the first arm portion 2, such as in the manner referred to hereinbefore, resiliently biases the locking member 5 into a downward position in which it is resiliently biased against an inner and adjacent surface 3a of the second arm portion 3. The locking member 5 is therefore resiliently held in this position, and a positive upward movement against the spring bias, (such as in the direction of arrow "B" in Figure 1 of the drawings), is required to move the locking member out of its position with the inner adjacent surface of the second arm portion 3, to allow for both location and removal of for example a connector within the closure space 4. It will be appreciated from Figure 2 of the drawings that ends of the closure member 5 are turned inwardly as at 5a, which ends 5a engage with offset holes or slots 7, provided in the first arm portion 2 and preferably in a lower portion of the first arm portion 2. This then causes the locking member 5 to be resiliently biased against the inner surface 3a of the second arm portion 3.

This resilient location, which requires a positive and upward movement against the bias, to move the locking member out of position, makes it very difficult for animals, people, children and the like to move the locking member 5 out of position, although a positive movement does allow for such removal, and thus predetermined use and normal operation is not hindered. The preferred embodiment of the invention does however overcome the problems as associated with animals and children, up until this time.

## Claims

1. A closure arrangement including a substantially hook shaped member comprising a shorter first arm portion (2) and a longer, at least partially curved second arm portion (3), said first and second arm portions (2, 3) being spaced apart one from the other, so as to define a closure space (4) therebetween; one of said arm portions having a locking member (5) pivotally connected thereto, said locking member (5) being formed and mounted to said one arm portion so as to be resiliently biased into releasable abutment with an adjacent surface of the other arm portion so as to extend into said closure space (4) substantially to close said space (4); said locking member (5) being capable of moving out of abutment with said other arm portion to provide an opening to said closure space (4), characterised in that said locking member (5) is pivotally connected to the shorter first arm portion (2) and the adjacent surface (3a) releasably abutted by the locking member (5) is provided on the longer second arm portion (3) at a location remote from the free end thereof, said free end being inclined towards and remote from the free end of the shorter first arm portion so as to prevent unintentional release of the closure arrangement.

2. A closure arrangement as claimed in claim 1, wherein ends (5a) of said locking member (5) are pivotally connected to said first arm portion (2), and are substantially offset relative to each other.

3. A closure arrangement as claimed in claim 1, wherein ends (5a) of said locking member (5) are pivotally connected to said first arm portion (2), and are offset relative to one another, in the direction of the longitudinal axis of said first arm portion (2).

4. A closure arrangement as claimed in claim 1, wherein ends (5a) of said locking member (5) are pivotally connected to said first arm portion (2), and are substantially offset relative to one another, in a direction which is substantially perpendicular to the longitudinal axis of said first arm portion (2).

5. A closure arrangement including a shorter first arm portion (2) and a longer second arm portion (3), said first and second arm portions (2, 3) being integrally formed but spaced apart one from the other, so as to define a closure space (4) therebetween, one of said arm portions having a locking member (5) pivotally connected thereto, ends (5a) of said locking member (5) being pivotally connected to said one arm portion and being offset relative to each other, so as to resiliently bias said locking member (5) into releasable abutment with an adjacent and spaced apart surface of the other arm portion, said locking member (5) thereby being capable of substantially closing said space (4); said locking member (5) being capable of being moved away from abutment with said adjacent surface to provide an opening to said closure space, characterised in that said locking member (5) is pivotally connected to the shorter first arm portion (2) and the adjacent surface (3a) releasably abutted by the locking member (5) is provided on the longer second arm portion (3) at a location remote from the free end thereof, said free end being inclined towards and remote from the free end of the shorter first arm portion so as to prevent unintentional release of the closure arrangement.

## Patentansprüche

1. Verschlußanordnung, bestehend aus einem im wesentlichen hakenförmigen Element, das sich zusammensetzt aus einem kürzeren ersten Armabschnitt (2) und einem längeren, mindestens teilweise gekrümmten zweiten Armabschnitt (3), wobei der erste und der zweite Armabschnitt (2, 3) in einem Abstand voneinander angeordnet sind, um so dazwischen einen Verschlußzwischenraum (4) zu bilden, wobei weiter einer der Armabschnitte ein auf diesem drehbar angebrachtes Verschlußglied (5) besitzt und dieses Verschlußglied (5) derart ausgeformt und an dem einen Armabschnitt befestigt ist, daß es sich federnd in ein ausrückbares Widerlager mit einer angrenzenden Oberfläche des anderen Armabschnittes neigt, so daß es im wesentlichen in den Verschlußzwischenraum (4) reicht und diesen Zwischenraum (4) schließt, und wobei weiter das Verschlußglied (5) aus dem Widerlager mit dem anderen Armabschnitt wegbewegt werden kann, um eine Öffnung zum Verschlußzwischenraum (4) zu bilden, dadurch gekennzeichnet, daß das Verschlußglied (5) mit dem kürzeren ersten Armabschnitt (2) drehbar verbunden ist und die angrenzende Oberfläche (3a), die durch Ausrücken des Verschlußgliedes (5) an dieses stößt, auf dem längeren zweiten Armabschnitt (3) an einer von seinem freien Ende entfernten Stelle gelegen ist, wobei dieses freie Ende schräg zum freien Ende des kürzeren ersten Armabschnittes verläuft und von diesem entfernt ist, so daß ein nicht beabsichtigtes Ausrücken der Verschlußanordnung verhindert wird.

2. Verschlußanordnung nach Anspruch 1, wobei die Enden (5a) des Verschlußgliedes (5) am ersten Armabschnitt (2) drehbar befestigt und relativ zueinander im wesentlichen versetzt sind.

3. Verschlußanordnung nach Anspruch 1, wobei die Enden (5a) des Verschlußgliedes (5) am ersten Armabschnitt (2) drehbar befestigt und in Richtung zur Längsachse des ersten Armabschnittes (2) relativ zueinander versetzt sind.

4. Verschlußanordnung nach Anspruch 1, wobei die Enden (5a) des Verschlußgliedes (5) am ersten Armabschnitt (2) drehbar befestigt sind und in eine Richtung, die weitgehend senkrecht zur Längsachse des ersten Armabschnittes (2) verläuft, im wesentlichen relativ zueinander versetzt sind.

5. Verschlußanordnung, bestehend aus einem kürzeren ersten Armabschnitt (2) und einem längeren zweiten Armabschnitt (3), wobei der erste und der zweite Armabschnitt (2, 3) zwar einstückig geformt, jedoch in einem Abstand voneinander angeordnet sind, um so zwischen ihnen einen Verschlußzwischenraum (4) zu bilden, wobei einer der Armabschnitte ein an diesem drehbar befestigtes Verschlußglied (5) besitzt und die Enden (5a) des Verschlußgliedes (5) an diesem Armabschnitt drehbar angebracht und relativ zueinander versetzt sind, so daß sich das Verschlußglied (5) federnd in ein ausrückbares Widerlager mit einer angrenzenden und in einem Abstand angeordneten Oberfläche des anderen Armabschnittes neigt, wodurch das Verschlußglied (5) den Zwischenraum (4) im wesentlichen schließen kann, und wobei weiter das Verschlußglied (5) vom Widerlager mit der angrenzenden Oberfläche wegbewegt werden kann, um eine Öffnung zum Verschlußzwischenraum zu bilden, dadurch gekennzeichnet, daß das Verschlußglied (5) mit dem kürzeren ersten Armabschnitt (2) drehbar verbunden ist und die angrenzende Oberfläche (3a), die durch Ausrücken des Verschlußgliedes (5) an dieses stößt, auf dem längeren zweiten Armabschnitt (3) an einer von seinem freien Ende entfernten Stelle gegeben ist, wobei dieses freie Ende schräg zum freien Ende des kürzeren ersten Armabschnittes verläuft und von diesem entfernt ist, so daß ein nicht beabsichtigtes Ausrücken der Verschlußanordnung verhindert wird.

**Revendications**

1. Dispositif de fermeture comprenant un organe ayant pratiquement une forme de crochet comprenant une première partie de bras (2) relativement courte et une seconde partie de bras (3) relativement longue et au moins partiellement courbe, la première et la seconde partie de bras (2, 3) étant placées à distance l'une de l'autre afin qu'elles délimitent entre elles un espace de fermeture (4), l'une des parties de bras ayant un organe de verrouillage (5) articulé sur elle, l'organe de verrouillage (5) ayant une forme et un montage, sur la première partie de bras, tels qu'il est rappelé élastiquement en position temporaire de coopération par butée avec une surface adjacente de l'autre partie de bras afin qu'il pénètre dans l'organe de fermeture (4) en fermant pratiquement ledit espace (4), l'organe de verrouillage (5) pouvant s'écarter de la position de butée contre l'autre partie de bras en formant une ouverture de l'espace de fermeture (4), caractérisé en ce que l'organe de verrouillage (5) est articulé sur la première partie de bras (2) relativement courte, et la surface adjacente (3a) qui coopère temporairement par butée avec l'organe de verrouillage (5), est formée sur la seconde partie de bras (3) à un emplacement distant de l'extrémité libre de cette partie de bras, l'extrémité libre étant inclinée vers l'extrémité libre de la première partie de bras relativement courte et étant distante de cette extrémité libre afin qu'une ouverture intempestive du dispositif de fermeture soit évitée.

2. Dispositif de fermeture selon la revendication 1, dans lequel les extrémités (5a) de l'organe de verrouillage (5) sont articulées sur la première partie de bras (2) et sont décalées notablement l'une par rapport à l'autre.

3. Dispositif de fermeture selon la revendication 1, dans lequel les extrémités (5a) de l'organe de verrouillage (5) sont articulées sur la première partie de bras (2) et sont décalées l'une par rapport à l'autre, dans la direction de l'axe longitudinal de la première partie de bras (2).

4. Dispositif de fermeture selon la revendication 1, dans lequel les extrémités (5a) de l'organe de verrouillage (5) sont articulées sur la première partie de bras (2) et sont notablement décalées l'une par rapport à l'autre, en direction sensiblement perpendiculaire à l'axe longitudinal de la première partie de bras (2).

5. Dispositif de fermeture comprenant une première partie de bras (2) relativement courte et une seconde partie de bras (3) relativement longue, la première et la seconde partie de bras (2, 3) étant formées en une seule pièce mais étant distantes l'une de l'autre afin qu'elles délimitent entre elles un espace de fermeture (4), l'une des parties de bras ayant un organe de verrouillage (5) articulé sur elle, les extrémités (5a) de l'organe de verrouillage (5) étant articulées sur la première partie de bras et étant décalées l'une par rapport à l'autre afin que l'organe de verrouillage (5) soit rappelé élastiquement en position temporaire de butée contre une surface adjacente et distante de l'autre partie de bras, l'organe de verrouillage (5) pouvant pratiquement fermer ledit espace (4), l'organe de verrouillage (5) pouvant être écarté de sa position de butée contre la surface adjacente en formant une ouverture pour l'espace de fermeture, caractérisé en ce que l'organe de verrouillage (5) est articulé sur la première partie de bras (2) relativement courte et la surface adjacente (3a) qui est temporairement en coopération par butée avec l'organe de verrouillage (5) est formée sur la seconde partie de bras (3) qui est relativement longue, à un emplacement distant de l'extrémité libre de cette partie, cette extrémité libre étant inclinée vers l'extrémité libre de la première partie de bras relativement courte et étant distante de cette dernière extrémité libre afin qu'une ouverture intempestive du dispositif de fermeture soit empêchée.

FIG.1.

FIG.2.